# EUROPEAN PATENT APPLICATION

(11) **EP 0 628 392 A1**
(43) Date of publication of application: **14.12.1994**
(21) Application number: 93921115.7
(22) Date of filing: 05.10.1993
(51) Int. Cl.: B29B 15/08, B65H 69/06, B29C 65/56, B29K 105/08

(54) **STRUCTURE OF FIBER-REINFORCED THERMOPLASTIC RESIN AND METHOD OF MANUFACTURING THE SAME**

(30) Priority: 05.10.1992 JP 266166/92
(71) Applicant: POLYPLASTICS CO. LTD., Chuo-Ku Osaka-shi Osaka 541 (JP)
(72) Inventor: FUJII, Yasuhisa 885-11, Miyajima, Shizuoka 416 (JP); SERIZAWA, Hajime 21-4, Sankeidai, Shizuoka 411 (JP)
(74) Representative: Jackson, Peter
(86) International application number: JP9301428
(87) International publication number: WO9407669

(57) **Abstract**

A method of manufacturing efficiently and economically a structure of a long-fiber-reinforced thermoplastic resin having a high mechanical strength, characterized in that, in order to manufacture a structure of a resin-reinforced thermoplastic resin containing 5-80 % by weight of substantially parallel-arranged reinforcing fibers, by impregnating a continuous fiber bundle with a molten thermoplastic resin while drawing the fiber bundle, an end portion of a winding of a fiber bundle being completely payed out and that of a fresh winding of a fiber bundle are joined to each other by using an air splicer, whereby fiber bundles are continuously supplied.

## Description

### [Field of the Invention]

The present invention relates to a fiber-reinforced thermoplastic resin structure having a high mechanical strength obtained by the reinforcement with long fibers, and an efficient economical process for producing it.

### [Related Art]

It is known to incorporate reinforcement fibers such as glass fibers into a thermoplastic resin in order to improve the strength and rigidity of the resin. Usually a fiber-reinforced thermoplastic resin is produced by blending a thermoplastic resin with short fibers such as a chopped strand and extruding the blend on an extruder. However, the improvement in the mechanical strength is naturally limited, since the fibers used are short and, in such a short fiber-reinforced resin, the breakage of the fibers is unavoidable during the kneading in the extruder. It is thus impossible to satisfy the requirement of a further improvement in the mechanical strength.

Recently, the pultrusion attracts attention as a process for producing a long fiber-reinforced thermoplastic resin without breaking the fibers by overcoming the above-described defect (see the specifications of U.S. Patent Nos. 2877501, 4439387 and 3022210, and the Official Gazette of Japanese Patent Publication-A No. 57-181852).

In the pultrusion, an assembly of fiber bundles (a rove of fiber bundles), which is prepared by treating a lot of single-fibers from a bushing with an aqueous solution or aqueous emulsion of a sizing agent, bundling them, rolling them round a reel to form a cylindrical roll and drying the roll, are usually used as the reinforcing fibers.

However, in the preparation of the long fiber-containing thermoplastic molding materials by extrusion-coating continuous fibers with a molten resin, the operation had to be suspended when the rove of fiber bundles had been consumed and started again after setting another rove thereof, since the entire length of the fiber bundle in each rove was limited. Thus much time was taken for the suspension and setting up.

### [Disclosure of the Invention]

After extensive investigations made for the purpose of solving the above-described problem, the present inventors have found that the continuous feeding of the fiber bundles is technically possible by sufficiently firmly joining the final end of the rove of fiver bundles consumed to the beginning end of another rove thereof. The present invention has been completed on the basis of this finding.

Namely, the present invention relates to a process for preparing a fiber-reinforced thermoplastic resin structure characterized in that in the production of a fiber-reinforced thermoplastic resin structure containing 5 to 80% by weight (based on the whole structure) of reinforcement fibers in a state arranged substantially in parallel by impregnating a continuous fiber bundle for reinforcement with a molten thermoplastic resin while drawing the fiber bundle, the fiber bundle is continuously fed by joining the final end of the rove of the fiber bundles consumed to the beginning end of another rove thereof by the use of an air splicer.

The variety of the thermoplastic resins used as the base of the fiber-reinforced thermoplastic resin structure is not particularly limited in the present invention. The thermoplastic resins usable herein include, for example, polyethylene; polypropylene; polyesters such as polyethylene terephthalate and polybutylene terephthalate; polyamides such as nylon 6, nylon 66, nylon 11, nylon 12, nylon 610 and nylon 612; polyacetals; polycarbonates; thermoplastic polyurethanes, polyphenylene oxides; polyphenylene sulfides; polysulfones; polyether ketones; polyether amides; and polyether imides.

The varieties of the reinforcement fibers to be used in the present invention are not particularly limited. They may be fibers each having a high melting point (a high softening point), such as glass fibers, carbon fibers, metal fibers and aromatic polyamide fibers. When the glass fibers are used, fiber bundles thereof having a fiber diameter of 6 to 25 µm and a weight for 1000 m thereof of 500 to 4400 g are usually used. These fibers may be those treated with a known surface treating agent.

The reinforcing fiber bundle to be used in the present invention is prepared by treating a lot of single-fibers from a bushing with an aqueous solution or aqueous emulsion of a sizing agent and then bundling them. In particular, the reinforcing fiber bundle is, for example, a rove of fiber bundles thus bundled and rolled round a reel to form a cylindrical roll (so-called package of direct roving), or a rove of fiber bundles thus rolled into a shape substantially free from an end and then dried (so-called cake rove).

As described above, in the preparation of the long fiber-containing thermoplastic molding materials by extrusion-coating continuous fibers with a molten resin, the operation had to be suspended when the rove of fiber bundles had been consumed and started again after setting another rove thereof, since the entire length of the fiber bundle in each rove was limited. Thus much time is taken for the suspension and setting up. An object of the present invention is to solve such a problem. The present invention is characterized by sufficiently firmly joining the final end of the rove of fiber bundles consumed to the beginning end of another rove thereof with an air splicer to make the continuous feeding of the fiber bundle possible.

The term "air splicing (joining of the fibers by means of an air splicer)" herein means a splicing operation without forming any knot by means of compressed air. In particular, an air jet is applied to the end of each of the two fiber bundles to be joined together to spread the end of each fiber bundle so that the fibers are partially or wholly disjointed, and the ends of the two fiber bundles thus spread are intertwined or twisted together to join them to each other. This process is roughly classified into two groups, "tangential air jet method" and "direct air jet method", depending on the manner of air jetting. Either method can be employed in the present invention. Although the kinds of the air splicer used are not particularly limited in the present invention, those having scissors for controlling the length of the paint to be spliced at the end of the fiber bundle, mechanisms for controlling the air-jetting pressure and time, etc., are preferred.

Such an air splicer has been used for the splicing in the field of fibers for clothes and so forth.

On the other hand, in the preparation of the long fiber-reinforced resin structure by impregnating the continuous fiber bundle for reinforcement with the molten resin while drawing the fiber bundle and squeezing the fiber bundle with a nozzle to remove excess resin to shape them into an intended shape as in the present invention, it has been known that an extremely heavy load is applied to the reinforcement fibers when they passed through the nozzle. It has been unexpected that the fibers can be effectively joined with such a splicer.

The amount of the reinforcement fibers thus fed continuously in the present invention is 5 to 80% by weight (based on the composition). When the amount of the reinforcement fibers is below 5% by weight, no sufficient reinforcing effect can be obtained and, on the contrary, when it exceeds 80% by weight, the preparation of the reinforced structure and the molding thereof become very difficult. A preferred amount of the reinforcement fibers is 10 to 75% by weight and particularly 20 to 70% by weight.

Although the die to be used in the pultrusion in the preparation of the fiber-reinforced thermoplastic resin structure of the present invention is not particularly limited, preferred is an impregnation die, particularly crosshead die from the viewpoint of operating characteristics. The impregnation method for the resin is not particularly limited and any of known methods such as a method of passing through a bent passage or a roller method can be employed.

In the fiber-reinforced thermoplastic resin structure of the present invention prepared as described above, the reinforcement fibers are substantially continuous over the whole length of the structure and arranged substantially in parallel with each other. By passing the structure through a shaping die, the structure can be shaped into a desired shape such as a strand, pellets, a tape or a sheet and taken off with take-off rolls.

The process of the present invention can be employed also for the preparation of a fiber-reinforced thermoplastic resin structure which further contains substances usually added to resins depending on the purpose and use, such as stabilizers, e.g. antioxidants, thermal stabilizers and ultraviolet absorbers; antistatic agents; lubricants: plasticizers; releasing agents; flame retardants; flame-retarding assistants; crystallization accelerators; colorants, e.g. dyes and pigments; and powdery, granular or platy inorganic and organic fillers.

It will be apparent from the above description and Examples that a fiber-reinforced thermoplastic resin structure can be efficiently and economically produced by the process of the present invention wherein the fiber bundle is continuously fed by joining the final end of the rove of the fiber bundles consumed to the beginning end of another rove thereof by the use of an air splicer in the preparation of the fiber-reinforced thermoplastic resin structure.

### [Examples]

The following Examples will further illustrate the present invention, which by no means limit the invention.

### Example 1

One hundred roves of glass fiber bundles were used each of which had been prepared by directly rolling the wet glass fiber bundle which was treated with an emulsion containing a sizing agent and bundled, followed by drying them. One hundred glass fiber bundles taken out of the roves were impregnated with molten polypropylene while it was drawn through a crosshead die, then shaped and cut into pieces to obtain a pelletlike fiber-reinforced thermoplastic resin structure having a glass fiber content of 50% by weight. When the fiber bundles remaining in the 100 roves of glass fiber bundles were running short in the course of the preparation, the ends of the roves were joined and fixed to the beginning of other 100 roves with an air splicer. Thus the glass fiber bundles were continuously fed. No suspension of the operation for the purpose of replacing the roves was necessitated in the course of the process for the preparation of the fiber-reinforced thermoplastic resin structure. Thus an extremely efficient and economical operation was possible.

### Comparative Example 1

Fiber-reinforced thermoplastic resin structures were prepared in the same manner as that of Example 1 except that the operation was suspended when the rove of the glass fiber bundles first set had been consumed and then started again after setting other roves of fiber bundles, without joining the fiber bundles by means of the air splicer. The time taken for the restart after the suspension of the operation was longer than 6 h.

## Claims

1. A process for preparing a fiber-reinforced thermoplastic resin structure characterized in that in the production of a fiber-reinforced thermoplastic resin structure containing 5 to 80% by weight (based on the whole structure) of reinforcement fibers in a state arranged substantially in parallel by impregnating a continuous fiber bundle for reinforcement with a molten thermoplastic resin while drawing the fiber bundle, the fiber bundle is continuously fed by joining the final end of the rove of the fiber bundles consumed to the beginning end of another rove thereof by the use of an air splicer.

2. The process for preparing a fiber-reinforced thermoplastic resin structure as set forth in claim 1, wherein the impregnation of the fiber bundle for reinforcement with a molten thermoplastic resin is conducted by the use of a crosshead die while drawing the fiber bundle.

3. A fiber-reinforced thermoplastic resin structure of a strand, pellet, tape or sheet form characterized in that the structure is prepared by the process as set forth in claim 1, and that the reinforcement fibers are arranged substantially and continuously over the whole length of the lengthwise direction of the structure nearly in parallel.
